# EUROPEAN PATENT SPECIFICATION

(11) **EP 3 868 596 B1**
(45) Date of publication and mention of the grant of the patent: **06.09.2023**
(21) Application number: 21382106.9
(22) Date of filing: 11.02.2021
(51) Int. Cl.: B60L 1/00

(54) **SYSTEM FOR MANAGING AN ELECTRIC CHARGING SERVICE IN A VEHICLE AND VEHICLE SUPPLYING AN ELECTRIC CHARGING SERVICE**
SYSTEM ZUR VERWALTUNG EINES ELEKTRISCHEN LADEDIENSTES IN EINEM FAHRZEUG UND FAHRZEUG ZUR BEREITSTELLUNG EINES ELEKTRISCHEN LADEDIENSTES
SYSTÈME DE GESTION DE SERVICE DE CHARGE ÉLECTRIQUE DANS UN VÉHICULE ET VÉHICULE FOURNISSANT UN SERVICE DE CHARGE ÉLECTRIQUE

(30) Priority: 21.02.2020 ES 202030146
(43) Date of publication of application: 25.08.2021
(73) Proprietor: Seat, S.A., 08760 Martorell (ES)
(72) Inventor: ÁLVAREZ NIETO, Mario, 08760 Martorell, Barcelona (ES)
(74) Representative: Elzaburu S.L.P.

(56) References cited:
- EP-A1- 2 605 340
- EP-A1- 2 677 607
- EP-A2- 2 597 005
- US-A1- 2017 274 790
- US-A1- 2018 281 614
- US-A1- 2018 351 388

## Description

### Technical field

The present invention concerns a system for managing an electric charging service in a vehicle, wherein a control unit manages a plurality of computing units of a plurality of vehicles in order to enable an electric power supply by means of charging supply means, the main function thereof being to manage the offer of charging means for devices external to the vehicle for any user.

Furthermore, the present application also describes, as an illustrative example, a vehicle which includes the necessary means in order to supply electric power to said devices external to the vehicle, with the same purpose as the first.

### State of the art

The system for managing an electric charging service in a vehicle object of the present invention, has special application in the field of the industry dedicated to the design, manufacture and sale of motor vehicles as well as in the portability of electric charging services for portable electronic devices.

We live in a society that is increasingly digital and in which, due to awareness in the use of energy technologies, more and more people opt for portable electronic devices as the main means of communication and for micromobility as the main means of transportation. This means that accessible electric power supply means are required at any point or location in order to favour the power supply to these technologies which are so necessary in our day-to-day life.

Every day, we use a multitude of mobile devices on several occasions during the day and as a direct consequence, this practice leads to a premature and continuous depletion of the batteries. As an example, 75% of the worldwide population states that they have a mobile phone addiction. Spain is the European country with the highest rate of adolescent addiction to the Internet, where 21.3% of adolescents suffer from it, while the European average is 12.7%.

This new lifestyle does nothing but create the need to provide accessible and mobile ports capable of supplying electric power to any electronic device requiring it. Since mobile electronic devices or smartphones are not the only electronic devices that need an electric power supply, but every day, we are even more connected by means of tablets, laptops, smartwatches... these being essential in our day-to-day lives.

It is important to remember, as we have mentioned previously, the growing use of electric transportation devices, highlighting electric scooters, electric bicycles, etc., which also require charging points capable of supplying electric power.

The reality of this situation is that there are very few electric power supply points in cities and, in general, they are usually occupied.

Furthermore, the currently existing charging ports do not have security measures, they are fixed in a specific point and the charging is generally performed by means of cables which, in many cases, are not originals and fast charging cannot be used in the charging or they are broken.

The goal is to be able to perform an electric power supply when there is no electricity in the public supplies, which increases convenience, security and reliability. This involves creating electric power supply sources independent from the public supply, this being essential for electric independence.

The problem lies in the fact that the current electric power supply means require expensive additional infrastructure, which occupies space on public roads and limits the possibilities for expansion and implementation in many spaces.

It is, therefore, necessary to offer an alternative to the state of the art which covers the gaps found therein, by providing a system for managing an electric charging service in a vehicle which does not suffer from the impediments currently present and, in particular, which lacks the disadvantages indicated above, among others.
Document US 2018/351388 A1 is known from the prior art. This document discloses a vehicle including a power system, a remote unlock system controlled by a remote unlocking device, and a door applique. The door applique comprises a wireless charger coupled to the power system, configured to charge the remote unlocking device, and a ridge configured to engage the remote unlocking device, wherein the wireless charger is configured to charge the remote unlocking device for a limited time.
Document EP 2605340 A1 is also known from the prior art. This document discloses a vehicle with a power supply connector, wherein the vehicle is provided with a connection signal line having electric potential changed when a connector of a power charging cable is attached to a control pilot line through which a pilot signal CPLT is transmitted from the power charging cable.
Document EP 2677607 A1 is also known from the prior art. This document discloses a vehicle equipped with an adapter, the adapter including a first connection portion that corresponds in geometry to an inlet and a second connection portion that corresponds in geometry to a power supply plug of electrical equipment external to a vehicle.
Document US 2017/274790 A1 is also known from the prior art. This document discloses a control method of a vehicle comprising receiving an input of a charge request period after a vehicle is electrically connected to an external power source, determining a power distribution rate of a rechargeable battery and at least one of peripheral device based on the charge request period and displaying the power distribution rate, receiving an input of an adjustment command related to the power distribution rate and distributing and supplying a power, which is supplied to the vehicle, to at least one of the rechargeable battery or the at least one peripheral device, according to a power distribution rate that is adjusted based on the adjustment Document US2018281614 A1 discloses a charging rescue system in which a rescue vehicle selected from a pool of vehicles is sent to a vehicle to be rescued in order to charge it. Furthermore, document EP 2597005 A2 is also known from the prior art. This document discloses an electricity supply vehicle with an electricity storage device charged with generated energy of an electric generator driven by an internal combustion engine mounted on the electricity supply vehicle or with regenerated energy of the electricity supply vehicle and is operable to supply electricity to an external equipment located outside of the electricity supply vehicle during stop of the electricity supply vehicle.

### Description of the invention

The object of the present invention is to provide and reinforce mobile electric charging stations, especially in cities, which solves the aforementioned drawbacks and has the advantages that will be described below through a system for managing an electric charging service in a vehicle.

The battery of electronic devices is often consumed quickly which is why the need arises to find a solution to the absence or scarcity of ports or mobile charging supply means present today in cities, since, as we have seen previously, every day more electronic devices are handled which have batteries, that may not last very long, but are considered as essential for day-to-day life.

To this end, the present invention concerns a system for managing an electric charging service in a vehicle, the system comprising a plurality of vehicles, wherein each vehicle comprises at least one charging supply means in communication with a computing unit of the vehicle.

As already introduced, in the system for managing an electric charging service in a vehicle of the present invention, each vehicle comprises at least one charging supply means in communication with a computing unit of the vehicle. The at least one charging supply means is configured to provide electric power to a consumer of electric charge external to the vehicles from an electric power storage device of the vehicle, wherein the consumer is suitable to be coupled to the at least one charging supply means.

Charging supply being understood as a component of the vehicle capable of providing electric power to a consumer outside of the vehicle, whether by physical, wireless or other means.

The object of the present invention is to supply electric power to a portable electronic device wherein a user has previously requested charging for it. To this end, the system for managing an electric charging service of the present invention comprises a control unit external to the vehicles, wherein the control unit is configured to transmit control signals to the computing unit of each vehicle and to at least one portable electronic device by means of a telecommunications network, and wherein the control unit is further configured to receive a charging service request of a user for the consumer from the portable electronic device of the user, wherein the charging service request comprises at least one location where the user wishes to obtain the electric power supply and a start time thereof. The control unit is further configured to determine a candidate vehicle among the plurality of vehicles which meets the previously determined requirements, taking into account both the charging service request received in order to offer the charging service for the consumer, as well as all the available vehicles, assign the candidate vehicle to the charging service request received from the user once the previously established parameters have been analysed and compared, pair the computing unit of the assigned vehicle and the portable electronic device of the user, and generate and send an activation signal of the computing unit to the at least one charging supply means of the assigned vehicle when a start request of the charging service is sent by the portable electronic device of the user at a time essentially the same as the start time of the charging service request, wherein the activation signal includes instructions for the start of the electric power supply to the consumer.
The at least one portable electronic device being understood as any smartphone, tablet, laptop, camera, electric scooter, or other devices outside of the vehicle which have a battery for the operation thereof. It should be noted that the portable electronic device provided in this invention does not limit the type and model thereof.

The control unit being understood as a computer, outside of the vehicle, comprising a memory and a processor for processing information. Preferably, it is an external server in communication by means of wireless networks with the computing units of each of the vehicles.

The main object pursued by the present invention consists of the user being able, from any location, to request and reserve an electric power supply point; either for the specific location where the user is located or for any location requested by them. An object of the present invention is also to increase the presence of charging points, both in number and in location, existing on public roads without modifying the infrastructure thereof. This is possible since the vehicles parked on public roads are converted into electric power supplies enabled to be able to supply electric power to external devices. From among the multitude of vehicles on public roads, the system is configured to allocate the best candidate based on the compliance with certain requirements requested by the user, explained below.

According to a variant of said implementation, the control unit, after receiving a charging service request of a user from a portable electronic device, analyses and verifies the location of all the candidate vehicles, which have charging supply means that exist and are available during the time slot previously established by the user and, after determining the candidate vehicle which meets the characteristics requested by the user, it is assigned and the computing unit of the vehicle is paired with the portable electronic device of the user.

If at least one of the candidate vehicles having charging supply means that exist and are available during the time slot previously established by the user does not have sufficient electric power to comply with the charging request previously established by the user, it will not enter the list of candidates to be evaluated in order to be selected as charging supply means by the control unit.

For another variant of said implementation wherein there are at least two candidate vehicles having charging supply means that exist and are available during the time slot previously established by the user, and which meet the characteristics requested by the user, the candidate vehicle assigned will be the one that is closest to the charging supply location requested by the user. This location can be any location previously indicated by the user; from the same position from where the charging request is made to any other one established previously.

In a preferred manner, the computing unit is capable of determining the amount of electric power to be supplied to the consumer of electric charging, based on a signal received from battery detection means which enables the amount of electric power stored in the storage device of the vehicle to be detected. In turn, the control unit is configured to assign the candidate vehicle to the charging service request of the user if the result of the comparison of the electric power requested with the electric power stored in the storage device of the vehicle is greater than a predefined value.

According to a variant of said implementation, if at least one of the candidate vehicles which has charging supply means that exist and are available during the time slot previously established by the user has a result of the comparison of the electric power requested with the electric power stored in the storage device of the vehicle that is less than a predefined value, it will not enter the list of candidates to be evaluated to be selected as charging supply means. However, the possibility is envisaged that, despite the fact that the result of the comparison of the electric power requested with the electric power stored in the storage device of the vehicle is less than a predefined value, the user will be offered the option of electric power supply for the period of time available by the vehicle in question taking into account the stored electric power thereof. In this manner, the user will have the option of either choosing a candidate vehicle which ensures that 100% of their initial request will be achieved or choosing a candidate vehicle which could be closer to the desired location but that, however, would not be able to fulfil all of their initial request. Therefore, it takes into account the priority that the user considers appropriate.

According to another variant of said implementation, the charging service request additionally comprises the possibility of establishing, in advance, an amount of electric power that the user requires in order to charge the specific portable electronic device, indicating in the charging service request the amount of electric power required.

According to another variant, the detection of the amount of electric power to be supplied is automatic. Thus, in the event that the charging service request additionally comprises an indication that the consumer of electric power is the portable electronic device that sends the charging service request or thanks to the specification of the portable electronic device in question that is going to make use of the electric charging service and the charging percentage that it requires, the system is capable of automatically calculating, in an intuitive, quick and accurate manner, the amount of electric power that will be consumed, taking into account values such as amperage, power to be consumed, time slot... among others. Unlike the electric charging services known in the state of the art, in the present invention it is intended that the user consuming charging external to the vehicle who has sent a charging service request be informed of the amount of electric power that they are going to consume in the charging thereof and the approximate time that the electric power supply will take until it is completed. In this manner, the control unit allocates, in addition to other parameters mentioned above, the assigned vehicle based on the amount of electric power demanded by the user and the amount of electric power available in the candidate vehicles.

According to a preferred embodiment, the system for managing a charging service comprises at least one electric lock. Thanks to the differentiation in the active control of access to the charging station, it is possible to privatise and control the access thereto, making the charging more exclusive and personalised. In this manner, the electric lock is in communication with the computing unit of the vehicle in order to automatically control the locking/unlocking thereof, and wherein the start request of the service comprises a request to open the access door to the at least one charging supply means, from the paired portable electronic device.

Consequently, the control unit is configured to generate and send an unlocking signal to the electric lock of the assigned vehicle when the request to open the access door is sent by the portable electronic device of the user at a time essentially the same as the start time of the charging service request. In the same manner, if no request to open the access door has been received, sent by the portable electronic device of the user at a time essentially the same as the start time of the charging service request, the control unit is configured to generate and send a locking signal to the electric lock of the assigned vehicle.

According to a variant of said implementation, the unlocking signal of the electric lock comprises sending a signal to keep locking/unlocking locks of access openings to the cabin of the vehicle locked. In this manner, when the control unit generates and sends an unlocking signal to the electric lock of the assigned vehicle, it sends another locking signal to access doors to the cabin of the vehicle. In this manner, access of third parties to the cabin of the paired vehicle is prevented, thus favouring both the security and the privacy of the owner of said vehicle.

According to an exemplary embodiment, the system for managing an electric charging service comprises sending, from the computing unit, a deactivation signal of the at least one charging supply means, wherein said deactivation signal comprises instructions to end an electric power supply when the at least one battery detection means determines that the amount of electric power stored in the storage device of the vehicle detected is less than a predefined value. In other words, the computing unit sends a deactivation signal of the at least one charging supply means, wherein said deactivation signal comprises instructions to end an electric power supply when the amount of electric power stored in the storage device of the vehicle detected does not exceed a certain value, which may cause the vehicle to not have enough electric power stored in the storage device in order to perform the following routes, or may even affect the useful life thereof.

According to a variant of said implementation, the system for managing an electric charging service comprises sending, from the computing unit, a deactivation signal of the at least one charging supply means, wherein said deactivation signal comprises instructions to end an electric power supply when the at least one battery detection means determines that the amount of electric power supplied is the same as the amount of electric power to be supplied sent in the charging service request. In this manner, only the electric power requested by the user is supplied, not supplying additional electric power.

Furthermore, according to another variant of the present invention, the system for managing an electric charging service comprises sending, from the computing unit, a deactivation signal of the at least one charging supply means, wherein said deactivation signal comprises instructions to end an electric power supply when the computing unit receives a transport start request of the vehicle, wherein said transport start request is sent from the portable electronic device of an owner of the vehicle or from an authorised access key to said vehicle. Consequently, if the owner of a vehicle intends to start a route with said vehicle, the electric power supply will be interrupted, thus enabling said route to be started.

Preferably, the at least one charging supply means is arranged on the outside of the vehicle. By way of example, the charging supply means is located on a side of the vehicle or a rear area of the vehicle. Preferably, the charging supply means may be locked by an access door and a lock for locking and/or unlocking said access door. This favours both safety when handling the supply means as well as the benefit and preventing wear caused by weather conditions.

It should be noted that the charging supply means provided in this invention does not limit the location or arrangement thereof.

According to an embodiment of the present invention, the control unit is configured to receive a charging authorisation signal from the portable electronic device of an owner of the vehicle, a step prior to the step of generating and sending an activation signal of the at least one charge supply means to the computing unit of the assigned vehicle. In this manner, if the charging is not authorised by the owner of the assigned candidate vehicle, the computing unit of the assigned vehicle will not be paired with the portable electronic device, nor will an activation signal be generated or sent to the at least one charging supply means.

Preferably, the system for managing an electric charging service is executed when the vehicle is stationary. In this manner, a higher precision is achieved in the location of the candidate vehicle in order to offer the charging service, in response to a charging service request received, since the location thereof will be precisely established with respect to the location of the request. However, if both the candidate vehicle and the user who has sent the charging request are in motion, the steps to be followed in order to activate at least one power supplying means would be the same.

According to a variant of said implementation, the charging service request additionally comprises the possibility of establishing, in advance, the desired location that the user requires to start charging the specific portable electronic device and the desired location that the user requires to finish charging the portable electronic device.

As presented, the mobile charging system described has the advantage of mobility. Instead of being fixed electric charging supply means and/or ports, they are mobile electric charging supply means and/or ports and which occupy, in a homogeneous and constant manner, public roads, providing the public space with multiple access points to electric power supply.

As an illustrative example, the present application describes a vehicle in order to operate with the same purpose as the system for managing an electric charging service, which includes; a computing unit in connection with a control unit, at least one charging supply means wherein a consumer of electric charging external to the vehicle is able to be coupled to the at least one charging supply means, and wherein the at least one charging supply means is configured to provide electric power to the consumer from an electric power storage device of the vehicle, the consumer being coupled to the at least one charging supply means.

Furthermore, the vehicle comprises a computing unit configured to receive an activation signal of the at least one charging supply means, sent by the control unit by means of a telecommunications network based on the fact that a start request of the charging service is sent by the portable electronic device of the user which has been previously paired with the computing unit of the vehicle by means of the control unit and to send instructions to start the electric power supply to the at least one charging supply means, based on the activation signal received.

In this manner, any vehicle in communication with the control unit can become a charging supply means for third parties.

Preferably, the at least one charging supply means mentioned previously is an induction charging system, an electric current terminal and/or a USB charging port, or any type of connector capable of performing a transmission of electric power between a first device and a second device.

It should be noted that the charging supply means provided in this invention does not limit the type and model thereof.

According to an exemplary embodiment, the vehicle comprises an electric lock of an access door to the at least one charging supply means, wherein the electric lock is in communication with the computing unit of the vehicle in order to automatically control the locking/unlocking thereof, wherein the computing unit of the vehicle is configured to send unlocking instructions to the electric lock, based on an unlocking signal of the electric lock received from the control unit by means of the telecommunications network.

The present invention provides a unique and differentiating technical advantage the function of which consists both of saving power, which means that the electric lock is unlocked if the user is going to use it and has previously made the request, and in the security that this offers.

Preferably, the electric lock of an access door to the at least one charging supply means is a lock the locking/unlocking of which is automatic or an electric lock which responds to the correct introduction of an access code previously established by the computing unit of the vehicle and communicated to the portable electronic device of the user through the control unit.

It should be noted that the electric lock provided in this invention does not limit the type and mechanisms used, any type of lock which prevents unauthorised access to the charging supply means being valid.

According to a variant of said implementation, the vehicle comprises a body which defines a closed cabin with access openings to said cabin, wherein the vehicle comprises mobile elements arranged in said access openings, wherein locking/unlocking signals of the access door to the at least one charging supply means are independent from locking/unlocking signals of the mobile elements arranged in said access openings to the cabin of the vehicle. In this manner, an instruction for locking or unlocking locks of the access doors to the vehicle are disconnected from the instructions to lock or unlock the locks of the access door to the at least one charging supply means, thus preventing unwanted access to the inside of the cabin of the vehicle.

Surprisingly, the present invention provides a unique and exceptional technical advantage the function of which is to facilitate and make accessible mobile charging points, for all types of electronic devices in any location.

As an additional advantage to the one provided by the present invention, we find the power saving caused by the single activation of the at least one charging supply means in response to the existence of certain predetermined conditions. This is so due to the fact that the charging supply means will respond to the activation order when there are conditions indicating that a start request of the charging service is sent by the portable electronic device of the user at a time essentially the same as the start time of the charging service request, wherein the activation signal comprises instructions for the start and end of the electric power supply.

It should be noted that the automobile can be an automobile for passengers, an automobile for merchandise, a lorry or a towing vehicle, as well as a vehicle with an electric or combustion engine. Likewise, it is valid for both autonomous vehicles and manual vehicles. This embodiment does not limit the type and model of the vehicle.

### Brief description of the drawings

The foregoing and other advantages and features will be better understood based on the following detailed description of several embodiments in reference to the attached drawings, which must be taken in an illustrative and non-limiting manner and wherein:
Figure 1 is a schematic view of the components that make up the system for managing an electric charging service in a vehicle;
Figure 2 is a block diagram representing the steps making up part of the system for managing an electric charging service in a vehicle.

### Detailed description of several embodiments

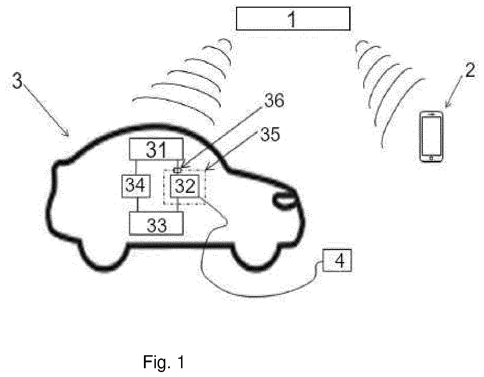

A preferred embodiment of the system for managing an electric charging service in a vehicle claimed with reference to figures 1 to 2 is described below.

Figure 1 illustrates in detail the set of elements forming the system which are located inside the vehicle 3 and those that necessarily make up part of the described system, but are found on the outside of the vehicle 3. In this particular case, not limiting the drawing or the means used for the preferential description of the idea, said components can be seen, as well as the arrangement thereof and connection with each other.

In light of the elements forming the system for managing an electric charging service in a vehicle 3, it has a control unit 1, in communication through wireless means with a vehicle 3 and with a portable electronic device 2. The drawing represents a single vehicle 3 and a single portable electronic device 2, but it is understood that the system of the present invention is made up of a plurality of vehicles 3 and a plurality of portable electronic devices 2, all of them in communication with one control unit 1.

Moreover, the vehicle 3 comprises a computing unit 31, which has processing means, memory means and connection means with other components of the vehicle 3. Said computing unit 31 is in communication with a charging supply means 32, which may be one or more, comprising means arranged and enabled to supply electric power to a consumer 4 of electric charging (external to the vehicle 3). Said charge supply 32 is such that it enables the coupling of the consumer 4 to the charging supply means 32, providing electric power to the consumer 4 (external to the vehicle 3), from an electric power storage device 33 of the vehicle 3.

The computing unit 31 may additionally be in communication with a battery detection means 34, such that the battery detection unit 34 sends a message to the computing unit 31 with information about the amount of electric power stored in a storage device 33 of the vehicle 3, in response to an express request by the computing unit 31. To do so, the detection unit 34 and the storage device 33 are in communication, preferably by cabling. The storage device 33 can be a high-voltage battery or a low-voltage battery of the vehicle 3, and can be the same as the ones responsible for the propulsion thereof or intended for other functions.

Optionally, the vehicle 3 has an access door 35 to the charging supply means 32. Said access door 35 can be any suitable component for enabling or limiting the access to the charging supply means 32, having, for example, a hinge which enables the folding of said access door 35. It is understood that if an access door 35 to the charging supply means 32 exists, a user external to the vehicle 3 will be able to access the charging supply means 32 only through the access door 35.

Optionally, the vehicle 3 can have at least one electric lock 36 of the access door 35 to the charging supply means 32, wherein the electric lock 36 is in communication with the computing unit 31 of the vehicle 3 in order to automatically control the locking/unlocking thereof. Thus, the computing unit 31 controls the locking or unlocking state of the access door 35, such that the access to the charging supply means 32 by third parties outside of the vehicle 3 will be limited or enabled, respectively.

The main objective of the present invention is to provide electric power to a consumer 4 outside of the vehicle 3. Said consumer 4 has been represented in figure 1 connected to the charging supply means 32 by means of cabling. The transmission of electric power can be any kind which enables charging the battery of said consumer 4, such as charging by means of wireless waves.

Moreover, the system for managing an electric charging service in a vehicle 3 comprises a portable electronic device 2, represented in figure 1 as a smartphone but being able to be any other device with means of processing and sending information with the control unit 1, which sends a charging service request to the control unit 1. A user who wishes to charge a consumer 4 in a vehicle 3 must make a charging service request by means of the portable electronic device 2. Once the request has been received, the control unit 1 determines a vehicle 3, from among the plurality of candidate vehicles, to offer the charging service.

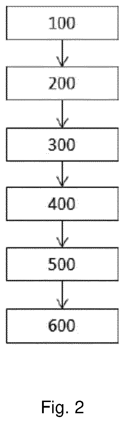

For the exemplary embodiment illustrated by Figure 2, the steps followed by the system through the control unit 1 are observed.

At first, as illustrated in the first step 100 of the method, the control unit 1 is configured to receive a charging service request of a user from the portable electronic device 2 of the user, wherein the charging service request comprises a location and a start time. In this first step, the request can be made from the same portable electronic device 2 that will receive the electric power supply or from a different portable electronic device 2. In this case, the possibility is foreseen of such a device being a laptop, a tablet, an electric scooter... among others. In addition to these parameters, the possibility is recognised of the user establishing in the charging service request both the amount of charging they are requesting and the preferred location where the charging supply is to be performed.

The second step 200 of the method consists of determining a candidate vehicle 3 to offer the charging service, based on the charging request received. The main object pursued by the present invention is that the user can, from any location, request and reserve, in any time slot, an electric power supply point according to their needs; either for the specific location where the user is located or for any location requested by them. This is possible since there are many available vehicles 3 parked on public roads. Thus, the control unit 1 determines the best candidate to provide the charging service request based on the requirements requested by the user, or that meets those requirements that the user considers as most important, additionally verifying that the vehicle 3 in question can meet said demands.

According to a preferred embodiment, the assignment of the candidate vehicle 3 is performed based on the location wherein the user has requested the charging service and the start time of said service. Thus, the control unit 1 knows both the current location and the future location of the plurality of vehicles 3 which can offer said service. Future location is understood as the location that the vehicle 3 will occupy according to the navigation data and paths that the system has. Specifically, the location of each vehicle 3 is evaluated at the start time of the service. Thus, the candidate vehicle 3 to be selected will be the one closest to the location indicated by the user, at the start time of the service.

According to an embodiment of the present invention, for the assignment of the candidate vehicle 3, the final charging time is taken into account, in other words, the time when the charging service will end. This final time can be expressly indicated by the user in the charging service request, or by calculating the foreseen time when the charging service will end, based on the amount of electric power demanded or to be supplied to the consumer 4. Specifically, a vehicle 3 will be assigned that is closest to the requested location and which remains at the location indicated by the user during the time interval between the start time and the end time, requested or foreseen, of the charging service.

According to an embodiment of the present invention, for the assignment of the candidate vehicle 3, the amount of electric power to be supplied is taken into account. This amount of electric power can be previously established by the user in the charging service request sent or it can be detected automatically by the system of the vehicle 3 itself. According to the first possibility, the user, in advance, can request a specific amount of electric power to charge the desired portable electronic device 2, indicating in the charging service request the amount of electric power required. According to the second possibility, the charging service request may additionally comprise an indication that the consumer 4 of electric power is the portable electronic device 2 itself which sends the charging service request, or that the consumer 4 of electric power is any other portable electronic device 2. In this manner, and taking into account the charging percentage existing therein and the electric power storage capacity of the device, said parameters being sent to the control unit 1, said control unit 1 is capable of automatically calculating in an intuitive, quick and accurate manner the amount of electric power that will be consumed, taking into account values such as amperage, power to be consumed, time slot... among others. Thus, the control unit 1 allocates, in addition to other parameters mentioned above, the assigned vehicle 3 based on the amount of electric power demanded by the user and the amount of electric power available in the candidate vehicles 3. Finally, said information about the amount of power to be supplied is sent to the computing unit 31 of the vehicle 3, with the aim of limiting the electric power supplied to the amount of electric power demanded.

According to a variant of said embodiment of the present invention, for the assignment of the candidate vehicle 3, the amount of electric power stored in the storage device 33 of the vehicle 3 is taken into account. Specifically, the control unit 1 is configured to assign the candidate vehicle 3 to the charging service request of the user if the result of the comparison of the electric power requested with the electric power stored in the storage device 33 of the vehicle 3 is greater than a predefined value. Additionally, given the existence of more than one candidate vehicle 3 available to supply electric power in the location and time slot required by the user, the control unit 1 will assign the vehicle with the highest electric power stored in the storage device 33. On the contrary, if at least one of the candidate vehicles 3 which has charging supply means 32 that exist and are available during the time slot previously established by the user has a result of the comparison of the electric power requested with the electric power stored in the storage device 33 of the vehicle 3 that is less than a predefined value, it will not enter the list of candidates to be evaluated to be selected as charging supply means 32. However, the possibility is envisaged that, despite the fact that the result of the comparison of the electric power requested with the electric power stored in the storage device 33 of the vehicle 3 is less than a predefined value, the user will be offered the option of electric power supply for the period of time available by the vehicle 3 in question taking into account the stored electric power thereof.

As a third step 300 of the method, the control unit 1 assigns the candidate vehicle 3 to the charging service request of the user. This happens when the candidate vehicle 3 meets all the requirements previously established by the user or when, despite not meeting all of them, it is the user who decides that a specific vehicle 3 be responsible for supplying the electric power demanded. According to a variant of the present invention, the control unit 1 sends to the portable electronic device 2 of the user a plurality of options of candidate vehicles 3 that are suitable for offering the requested charging service, such that it is the user who performs the assignment of the candidate vehicle 3.

As illustrated in the fourth step 400, the computing unit 31 of the assigned vehicle 3 and the portable electronic device 2 of the user are paired with each other by means of the control unit 1. Thus, the control unit 1 will reserve the vehicle 3 assigned to the specific charging service, such that said vehicle 3 will not be able to be assigned for other charging services in the time slot of the charging service for which it has been paired.

Pairing the computing unit 31 of the vehicle 3 with the portable electronic device 2 of the user is understood as sending a set of confirmation messages to both devices with the aim of, on the one hand, notifying the computing unit 31 about the vehicle 3 that has been allocated to offer a charging service and, on the other hand, notifying the user about the satisfactory assignment of a vehicle 3 which meets the needs of the requested charging service. The computing unit 31 of the vehicle will be aware of the start time and other parameters of the charging service demanded, thus being able to know the moment it is activated and/or the amount of electric power to be supplied and/or the amperage demanded, among other parameters.

Optionally, pairing the computing unit 31 of the vehicle 3 with the portable electronic device 2 of the user means sending a plurality of unique codes associated with the specific charging service. Thus, and in the event that there is an electric lock 36 for locking an access door 35 to the charging supply means 32, both the vehicle 3 and the portable electronic device 2 will be notified with the codes that enable the unlocking of the electric lock 36 in question, enabling the user to access the charging supply means 32 in order to be able to couple the consumer 4.

According to the fifth step 500 of the method, the control unit 1 is configured to generate and send an activation signal of the at least one charging supply means 32 to the computing unit 31 of the assigned vehicle 3. This activation signal is generated and sent in response to a start request of the charging service sent by the portable electronic device 2 of the user. The control unit 1 will verify that the demand to start the charging service is performed at a time substantially the same as the start time of the service demanded previously. If there is an affirmative verification, the control unit 1 will send a message to the computing unit 31 of the vehicle 3 in order to enable electric power to be sent by means of the charging supply means 32. Optionally, the control unit 1 sends a locking/unlocking signal to the computing unit 31 in order to unlock the electric lock 36 of the assigned vehicle 3 when the request to open the access door 35 is sent by the portable electronic device 2 of the user at a time essentially the same as the start time of the charging service request.

According to a variant of the present invention, the method has a step 600 wherein the computing unit 31 disables the electric power supply. Thus, the charging supply means 32 will end the contribution of electric power to the consumer 4. Said signal to disable the electric power supply can be sent when the current time is equal to the end time of the charging service demanded, or when the amount of power supplied is equal to the amount of electric power demanded or, in the absence thereof, estimated to completely charge the battery of consumer 4, among others.

Optionally, the computing unit 31 is configured to lock the electric lock 36 of the access door 35 of the charging supply means 32 once the charging service has ended.

Optionally, both the signal to disable the charging supply means 32 and the signal to lock the electric lock 36 can be notified to the control unit 1 with the aim of informing that the charging service has ended and that the vehicle 3 can be assigned to perform another demanded charging service.

Although reference has been made to a specific embodiment of the invention, it is clear to a person skilled in the art that both the system for managing an electric charging service in a vehicle such as the vehicle itself described are susceptible to numerous variations and modifications, without departing from the scope of protection defined by the attached claims.

### List of references of the Figures:

1 control unit
2 portable electronic device
3 vehicle
31 computing unit
32 charging supply means
33 storage device
34 battery detection means
35 access door
36 electric lock
4 consumer

## Claims

1. A system for managing an electric charging service in a vehicle, the system comprising a plurality of vehicles (3), wherein each vehicle comprises:
- at least one charging supply means (32) in communication with a computing unit (31) of the vehicle (3), wherein the at least one charging supply means (32) is configured to provide electric power to a consumer (4) of electric charge external to the vehicles (3) from an electric power storage device (33) of the vehicle (3), wherein the consumer (4) is suitable to be coupled to the at least one charging supply means (32);
wherein that the system comprises a control unit (1) external to the vehicles (3), wherein the control unit (1) is configured to transmit control signals to the computing unit (31) of at least one vehicle (3) and to a portable electronic device (2) external to the vehicles (3) by means of a telecommunications network, and
wherein the control unit (1) is further configured to:
a) receive a charging service request of a user for the consumer (4) from the portable electronic device (2) of the user, wherein the charging service request comprises a location and a start time,
b) determine a candidate vehicle among the plurality of vehicles (3) to offer the charging service for the consumer (4), based on the charging service request received,
c) assign the candidate vehicle to the charging service request of the user,
d) pair the computing unit (31) of the assigned vehicle and the portable electronic device (2) of the user,
e) generate and send an activation signal of the at least one charging supply means (32) to the computing unit (31) of the assigned vehicle when a start request of the charging service is sent by the portable electronic device (2) of the user at a time essentially the same as the start time of the charging service request, wherein the activation signal comprises instructions for the start of the electric power supply to the consumer (4).

2. The system for managing an electric charging service according to claim 1, wherein the charging service request additionally comprises an amount of electric power to be supplied to the consumer (4) of electric charging, wherein each vehicle (3) comprises at least one battery detection means (34) in communication with the computing unit (31), and configured to detect the amount of electric power stored in the storage device (33) of the vehicle (3), and wherein the control unit (1) is configured to assign the candidate vehicle (3) among the plurality of vehicles (3) to the charging service request of the user if the result of the comparison of the electric power requested with the electric power stored in the storage device (33) of the vehicle (3) is greater than a predefined value.

3. The system for managing an electric charging service according to claim 1, wherein the charging service request additionally comprises an indication that the consumer (4) of electric power is the portable electronic device (2) that sends the charging service request, wherein the control unit (1) is configured to receive an amount of electric power to be supplied to the portable electronic device (2) previously calculated by the portable electronic device (2) itself, wherein each vehicle (3) comprises at least one battery detection means (34) in communication with the computing unit (31), and configured to detect the amount of electric power stored in the storage device (33) of the vehicle (3), and wherein the control unit (1) is configured to assign the candidate vehicle (3) among the plurality of vehicles (3) to the charging service request of the user if the result of the comparison of the requested electric power with the stored electric power stored in the storage device (33) of the vehicle (3) is greater than a predefined value.

4. The system for managing an electric charging service according to any of the preceding claims, comprising an electric lock (36) of an access door (35) to the at least one charging supply means (32) of each vehicle (3), wherein the electric lock (36) is in communication with the computing unit (31) of the vehicle (3) in order to automatically control the locking/unlocking thereof, and wherein the start request of the service comprises a request to open the access door (35) to the at least one charging supply means (32), from the paired portable electronic device (2), wherein the control unit (1) is configured to generate and send an unlocking signal of the electric lock (36) to the computing unit (31) of the assigned vehicle (3) when the request to open the access door (35) is sent by the portable electronic device of the user (2) at a time essentially the same as the start time of the charging service request.

5. The system for managing an electric charging service according to claim 4, wherein the unlocking signal of the electric lock (36) comprises sending a signal to keep locks for locking/unlocking access openings to the cabin of the vehicle (3) locked.

6. The system for managing an electric charging service according to claim 3, comprising sending, from the computing unit (31), a deactivation signal of the at least one charging supply means (32), wherein said deactivation signal comprises instructions to end an electric power supply when the at least one battery detection means (34) determines that the amount of electric power stored in the storage device (33) of the detected vehicle (3) is less than a predefined value.

7. The system for managing an electric charging service according to claim 2, comprising sending, from the computing unit (31), a deactivation signal of the at least one charging supply means (32), wherein said deactivation signal comprises instructions to end an electric power supply when the at least one battery detection means (34) determines that the amount of electric power supplied is the same as the amount of electric power to be supplied sent in the charging service request.

8. The system for managing an electric charging service according to any of claims 1 to 5, comprising sending, from the computing unit (31), a deactivation signal of the at least one charging supply means (32), wherein said deactivation signal comprises instructions to end an electric power supply when the computing unit (31) receives a transport start request of the vehicle (3), wherein said transport start request is sent from the portable electronic device (2) of an owner of the vehicle (3) or from an authorised access key to said vehicle (3).

9. The system for managing an electric charging service according to any of the preceding claims, wherein the at least one charging supply means (32) is arranged on the outside of the vehicle (3).

10. The system for managing an electric charging service according to any of the preceding claims, wherein the control unit (1) is configured to receive a charging authorisation signal from the portable electronic device (2) of an owner of the vehicle (3), a step prior to the step of generating and sending an activation signal of the at least one charging supply means (32) to the computing unit (31) of the assigned vehicle (3).

## Patentansprüche

1. System zum Verwalten eines elektrischen Ladedienstes in einem Fahrzeug, das System umfassend eine Vielzahl von Fahrzeugen (3), wobei jedes Fahrzeug Folgendes umfasst:
- mindestens eine Ladungszufuhreinrichtung (32), die mit einer Recheneinheit (31) des Fahrzeugs (3) in Verbindung ist, wobei die mindestens eine Ladungszufuhreinrichtung (32) konfiguriert ist, um einem Verbraucher (4) elektrischer Ladung, der extern zu den Fahrzeugen (3) ist, elektrische Energie aus einer Speichervorrichtung elektrischer Energie (33) des Fahrzeugs (3) zuzuführen, wobei der Verbraucher (4) geeignet ist, um mit der mindestens einen Ladungszufuhreinrichtung (32) gekoppelt zu werden;
wobei das System eine Steuereinheit (1) umfasst, die extern zu den Fahrzeugen (3) ist, wobei die Steuereinheit (1) konfiguriert ist, um mittels eines Telekommunikationsnetzwerks Steuersignale an die Recheneinheit (31) mindestens eines Fahrzeugs (3) und an eine tragbare elektronisches Vorrichtung (2), die extern zu den Fahrzeugen (3) ist, zu übertragen, und
wobei die Steuereinheit (1) ferner zu Folgendem konfiguriert ist:
a) Empfangen einer Ladedienstanforderung eines Benutzers für den Verbraucher (4) von der tragbaren elektronischen Vorrichtung (2) des Benutzers, wobei die Ladedienstanforderung einen Ort und eine Startzeit umfasst,
b) Bestimmen eines Kandidatenfahrzeugs aus der Vielzahl von Fahrzeugen (3), der den Ladedienst für den Verbraucher (4) anbieten soll, basierend auf der empfangenen Ladedienstanforderung,
c) Zuweisen des Kandidatenfahrzeugs zu der Ladedienstanforderung des Benutzers,
d) Paaren der Recheneinheit (31) des zugewiesenen Fahrzeugs und der tragbaren elektronischen Vorrichtung (2) des Benutzers,
e) Erzeugen und Senden eines Aktivierungssignals der mindestens einen Ladungszufuhreinrichtung (32) an die Recheneinheit (31) des zugewiesen en Fahrzeugs, wenn eine Startanforderung des Ladedienstes durch die tragbare elektronische Vorrichtung (2) des Benutzers zu einem Zeitpunkt gesendet wird, der im Wesentlichen mit der Startzeit der Ladedienstanforderung übereinstimmt, wobei das Aktivierungssignal Anweisungen für den Start der Zufuhr elektrischer Energie zu dem Verbraucher (4) umfasst.

2. System zum Verwalten eines elektrischen Ladedienstes nach Anspruch 1, wobei die Ladedienstanforderung zusätzlich eine Menge an elektrischer Energie umfasst, die zu dem Verbraucher (4) elektrischer Ladung zugeführt werden soll, wobei jedes Fahrzeug (3) mindestens eine Batterieerfassungseinrichtung (34) in Kommunikation mit der Recheneinheit (31) umfasst, und konfiguriert ist, um die in der Speichervorrichtung (33) des Fahrzeugs (3) gespeicherte Menge an elektrischer Energie zu erfassen, und wobei die Steuereinheit (1) konfiguriert ist, um das Kandidatenfahrzeug (3) aus der Vielzahl der Fahrzeuge (3) der Ladedienstanforderung des Benutzers zuzuweisen, wenn das Resultat des Vergleichs der angeforderten elektrischen Energie mit der in der Speichervorrichtung (33) des Fahrzeugs (3) gespeicherten elektrischen Energie größer ist als ein vordefinierter Wert.

3. System zum Verwalten eines elektrischen Ladedienstes nach Anspruch 1, wobei die Ladedienstanforderung zusätzlich eine Angabe umfasst, dass der Verbraucher (4) von elektrischer Energie die tragbare elektronische Vorrichtung (2) ist, das die Ladedienstanforderung sendet, wobei die Steuereinheit (1) konfiguriert ist, um eine Menge an elektrischer Energie zu empfangen, die zu der tragbaren elektronischen Vorrichtung (2) zugeführt werden soll, die zuvor von der tragbaren elektronischen Vorrichtung (2) an sich berechnet wurde, wobei jedes Fahrzeug (3) mindestens eine Batterieerfassungseinrichtung (34) in Kommunikation mit der Recheneinheit (31) umfasst, und konfiguriert ist, um die in der Speichervorrichtung (33) des Fahrzeugs (3) gespeicherte Menge an elektrischer Energie zu erfassen, und wobei die Steuereinheit (1) konfiguriert ist, um das Kandidatenfahrzeug (3) aus der Vielzahl der Fahrzeuge (3) der Ladedienstanforderung des Benutzers zuzuweisen, wenn das Resultat des Vergleichs der angeforderten elektrischen Energie mit der in der Speichervorrichtung (33) des Fahrzeugs (3) gespeicherten elektrischen Energie größer ist als ein vordefinierter Wert.

4. System zum Verwalten eines elektrischen Ladedienstes nach einem der vorhergehenden Ansprüche, umfassend eine elektrische Verriegelung (36) einer Zugangsklappe (35) zu der mindestens einen Ladungszufuhreinrichtung (32) von jedem Fahrzeug (3), wobei die elektrische Verriegelung (36) in Kommunikation mit der Recheneinheit (31) des Fahrzeugs (3) ist, um dessen Ver-/Entriegelung automatisch zu steuern, und wobei die Startanforderung des Dienstes eine Anforderung zum Öffnen der Zugangsklappe (35) zu der mindestens einen Ladungszufuhreinrichtung (32) von der gekoppelten tragbaren elektronischen Vorrichtung (2) umfasst, wobei die Steuereinheit (1) konfiguriert ist, um ein Entriegelungssignal der elektrischen Verriegelung (36) zu erzeugen und an die Recheneinheit (31) des zugewiesenen Fahrzeugs (3) zu senden, wenn die Anforderung zum Öffnen der Zugangsklappe (35) von der tragbaren elektronischen Vorrichtung des Benutzers (2) zu einer Zeit gesendet wird, die im Wesentlichen mit der Startzeit der Ladedienstanforderung übereinstimmt.

5. System zum Verwalten eines elektrischen Ladedienstes nach Anspruch 4, wobei das Entriegelungssignal der elektrischen Verriegelung (36) ein Senden eines Signals umfasst, um Verriegelungen zum Verriegeln/Entriegeln der Zugangsöffnungen zu der Kabine des Fahrzeugs (3) verriegelt zu halten.

6. System zum Verwalten eines elektrischen Ladedienstes nach Anspruch 3, umfassend ein Senden eines Deaktivierungssignals der mindestens einen Ladungszufuhreinrichtung (32) von der Recheneinheit (31), wobei das Deaktivierungssignal Anweisungen zum Beenden einer Zufuhr elektrischer Energie umfasst, wenn die mindestens eine Batterieerfassungseinrichtung (34) bestimmt, dass die in der Speichervorrichtung (33) des erfassten Fahrzeugs (3) gespeicherte Menge an elektrischer Energie niedriger ist als ein vordefinierter Wert.

7. System zum Verwalten eines elektrischen Ladedienstes nach Anspruch 2, umfassend ein Senden eines Deaktivierungssignals der mindestens einen Ladungszufuhreinrichtung (32) von der Recheneinheit (31), wobei das Deaktivierungssignal Anweisungen zum Beenden einer Zufuhr elektrischer Energie umfasst, wenn die mindestens eine Batterieerfassungseinrichtung (34) bestimmt, dass die Menge an zugeführter elektrischer Energie gleich ist wie die Menge an elektrischer Energie ist, die in der Ladedienstanforderung gesendet wurde.

8. System zum Verwalten eines elektrischen Ladedienstes nach einem der Ansprüche 1 bis 5, umfassend ein Senden eines Deaktivierungssignals der mindestens einen Ladungszufuhreinrichtung (32) von der Recheneinheit (31), wobei das Deaktivierungssignal Anweisungen zum Beenden einer Zufuhr elektrischer Energie umfasst, wenn die Recheneinheit (31) eine Transportstartanforderung des Fahrzeugs (3) empfängt, wobei die Transportstartanforderung von der tragbaren elektronischen Vorrichtung (2) eines Eigentümers des Fahrzeugs (3) oder von einem autorisierten Zugangsschlüssel zu dem Fahrzeug (3) gesendet wird.

9. System zum Verwalten eines elektrischen Ladedienstes nach einem der vorherigen Ansprüche, wobei die mindestens eine Ladungszufuhreinrichtung (32) an der Außenseite des Fahrzeugs (3) angeordnet ist.

10. System zum Verwalten eines elektrischen Ladedienstes nach einem der vorherigen Ansprüche, wobei die Steuereinheit (1) konfiguriert ist, um einen Schritt vor dem Schritt eines Erzeugens und Sendens eines Aktivierungssignals der mindestens einen Ladungszufuhreinrichtung (32) an die Recheneinheit (31) des zugewiesen en Fahrzeugs (3) ein Ladeberechtigungssignal von der tragbaren elektronischen Vorrichtung (2) eines Eigentümers des Fahrzeugs (3) zu empfangen.

## Revendications

1. Système de gestion d'un service de charge électrique dans un véhicule, le système comprenant une pluralité de véhicules (3), dans lequel chaque véhicule comprend :
- au moins un moyen de fourniture de charge (32) en communication avec une unité de calcul informatique (31) du véhicule (3), dans lequel ledit au moins un moyen de fourniture de charge (32) est configuré de manière à fournir de l'énergie électrique à un équipement de consommation (4) de charge électrique externe au véhicule (3) à partir d'un dispositif de stockage d'énergie électrique (33) du véhicule (3), dans lequel l'équipement de consommation (4) est apte à être couplé audit au moins un moyen de fourniture de charge (32) ;
dans lequel le système comprend une unité de commande (1) externe au véhicule (3), dans laquelle l'unité de commande (1) est configurée de manière à transmettre des signaux de commande à l'unité de calcul informatique (31) d'au moins un véhicule (3) et à un dispositif électronique portatif (2) externe au véhicule (3), au moyen d'un réseau de télécommunication ; et
dans laquelle l'unité de commande (1) est en outre configurée de manière à :
a) recevoir une demande de service de charge d'un utilisateur pour l'équipement de consommation (4) à partir du dispositif électronique portatif (2) de l'utilisateur, dans laquelle la demande de service de charge comprend un emplacement et une heure de début ;
b) déterminer un véhicule candidat parmi la pluralité de véhicules (3) pour offrir le service de charge à l'équipement de consommation (4), sur la base de la demande de service de charge reçue ;
c) affecter le véhicule candidat à la demande de service de charge de l'utilisateur ;
d) apparier l'unité de calcul informatique (31) du véhicule affecté et le dispositif électronique portatif (2) de l'utilisateur ;
e) générer et envoyer un signal d'activation dudit au moins un moyen de fourniture de charge (32) à l'unité de calcul informatique (31) du véhicule affecté, lorsqu'une demande de démarrage du service de charge est envoyée par le dispositif électronique portatif (2) de l'utilisateur à un instant essentiellement identique à l'heure de début de la demande de service de charge, dans lequel le signal d'activation comprend des instructions pour le début de la fourniture d'énergie électrique à l'équipement de consommation (4).

2. Système de gestion d'un service de charge électrique selon la revendication 1, dans lequel la demande de service de charge comprend en outre une quantité d'énergie électrique devant être fournie à l'équipement de consommation (4) de charge électrique, dans lequel chaque véhicule (3) comprend au moins un moyen de détection de batterie (34) en communication avec l'unité de calcul informatique (31), et configuré de manière à détecter la quantité d'énergie électrique stockée dans le dispositif de stockage (33) du véhicule (3), et dans lequel l'unité de commande (1) est configurée de manière à affecter le véhicule candidat (3), parmi la pluralité de véhicules (3), à la demande de service de charge de l'utilisateur, si le résultat de la comparaison entre l'énergie électrique demandée et l'énergie électrique stockée dans le dispositif de stockage (33) du véhicule (3) est supérieur à une valeur prédéfinie.

3. Système de gestion d'un service de charge électrique selon la revendication 1, dans lequel la demande de service de charge comprend en outre une indication indiquant que l'équipement de consommation (4) d'énergie électrique est le dispositif électronique portatif (2) qui envoie la demande de service de charge, dans lequel l'unité de commande (1) est configurée de manière à recevoir une quantité d'énergie électrique devant être fournie au dispositif électronique portatif (2), calculée au préalable par le dispositif électronique portatif (2) lui-même, dans lequel chaque véhicule (3) comprend au moins un moyen de détection de batterie (34) en communication avec l'unité de calcul informatique (31), et configuré de manière à détecter la quantité d'énergie électrique stockée dans le dispositif de stockage (33) du véhicule (3), et dans lequel l'unité de commande (1) est configurée de manière à affecter le véhicule candidat (3), parmi la pluralité de véhicules (3), à la demande de service de charge de l'utilisateur, si le résultat de la comparaison entre l'énergie électrique demandée et l'énergie électrique stockée dans le dispositif de stockage (33) du véhicule (3) est supérieur à une valeur prédéfinie.

4. Système de gestion d'un service de charge électrique selon l'une quelconque des revendications précédentes, comprenant une serrure électrique (36) d'une porte d'accès (35) audit au moins un moyen de fourniture de charge (32) de chaque véhicule (3), dans lequel la serrure électrique (36) est en communication avec l'unité de calcul informatique (31) du véhicule (3) afin de commander automatiquement le verrouillage/déverrouillage de celui-ci, et dans lequel la demande de démarrage du service comprend une demande d'ouverture de la porte d'accès (35) audit au moins un moyen de fourniture de charge (32), en provenance du dispositif électronique portatif apparié (2), dans lequel l'unité de commande (1) est configurée de manière à générer et envoyer un signal de déverrouillage de la serrure électrique (36) à l'unité de calcul informatique (31) du véhicule affecté (3) lorsque la demande d'ouverture de la porte d'accès (35) est envoyée par le dispositif électronique portatif de l'utilisateur (2) à un instant essentiellement identique à l'heure de début de la demande de service de charge.

5. Système de gestion d'un service de charge électrique selon la revendication 4, dans lequel le signal de déverrouillage de la serrure électrique (36) comprend l'envoi d'un signal visant à maintenir verrouillées les serrures de verrouillage/déverrouillage d'ouvertures d'accès à l'habitacle du véhicule (3).

6. Système de gestion d'un service de charge électrique selon la revendication 3, comprenant l'étape consistant à envoyer, à partir de l'unité de calcul informatique (31), un signal de désactivation dudit au moins un moyen de fourniture de charge (32), dans lequel ledit signal de désactivation comprend des instructions pour mettre fin à une fourniture d'énergie électrique lorsque ledit au moins un moyen de détection de batterie (34) détermine que la quantité d'énergie électrique stockée dans le dispositif de stockage (33) du véhicule détecté (3) est inférieure à une valeur prédéfinie.

7. Système de gestion d'un service de charge électrique selon la revendication 2, comprenant l'étape consistant à envoyer, à partir de l'unité de calcul informatique (31), un signal de désactivation dudit au moins un moyen de fourniture de charge (32), dans lequel ledit signal de désactivation comprend des instructions pour mettre fin à un fourniture d'énergie électrique lorsque ledit au moins un moyen de détection de batterie (34) détermine que la quantité d'énergie électrique fournie est la même que la quantité d'énergie électrique devant être fournie envoyée dans le cadre de la demande de service de charge.

8. Système de gestion d'un service de charge électrique selon l'une quelconque des revendications 1 à 5, comprenant l'étape consistant à envoyer, à partir de l'unité de calcul informatique (31), un signal de désactivation dudit au moins un moyen de fourniture de charge (32), dans lequel ledit signal de désactivation comprend des instructions pour mettre fin à une fourniture d'énergie électrique lorsque l'unité de calcul informatique (31) reçoit une demande de démarrage de transport du véhicule (3), dans lequel ladite demande de démarrage de transport est envoyée à partir du dispositif électronique portatif (2) d'un propriétaire du véhicule (3) ou à partir d'une clé d'accès autorisée audit véhicule (3).

9. Système de gestion d'un service de charge électrique selon l'une quelconque des revendications précédentes, dans lequel ledit au moins un moyen de fourniture de charge (32) est agencé à l'extérieur du véhicule (3).

10. Système de gestion d'un service de charge électrique selon l'une quelconque des revendications précédentes, dans lequel l'unité de commande (1) est configurée de manière à recevoir un signal d'autorisation de charge en provenance du dispositif électronique portatif (2) d'un propriétaire du véhicule (3), au cours d'une étape qui précède l'étape de génération et d'envoi d'un signal d'activation dudit au moins un moyen de fourniture de charge (32) à l'unité de calcul informatique (31) du véhicule affecté (3).
